(19) **Europäisches Patentamt / European Patent Office / Office européen des brevets**

(11) **EP 3 865 957 B1**

(12) **EUROPEAN PATENT SPECIFICATION**

(45) Date of publication and mention
of the grant of the patent:
**09.08.2023 Bulletin 2023/32**

(21) Application number: **19871120.2**

(22) Date of filing: **14.06.2019**

(51) International Patent Classification (IPC):
**G05B 11/36** (2006.01)    **G05B 13/04** (2006.01)
**G05B 17/02** (2006.01)    **H02P 6/34** (2016.01)

(52) Cooperative Patent Classification (CPC):
**H02P 6/34; G05B 13/04**

(86) International application number:
**PCT/JP2019/023646**

(87) International publication number:
**WO 2020/075344 (16.04.2020 Gazette 2020/16)**

(54) **FEEDBACK CONTROL METHOD AND FEEDBACK CONTROL DEVICE**

VERFAHREN UND VORRICHTUNG ZUR RÜCKKOPPLUNGSREGELUNG

PROCÉDÉ DE COMMANDE À RÉTROACTION ET DISPOSITIF DE COMMANDE À RÉTROACTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.10.2018 JP 2018190884**

(43) Date of publication of application:
**18.08.2021 Bulletin 2021/33**

(73) Proprietor: **HITACHI INDUSTRIAL EQUIPMENT SYSTEMS CO., LTD.**
**Chiyoda-ku**
**Tokyo 101-0022 (JP)**

(72) Inventors:
- **MATSUBARA Mitsuru**
  **Tokyo 100-8280 (JP)**
- **TAKANO Yuuri**
  **Tokyo 101-0022 (JP)**
- **UEI Yusuke**
  **Tokyo 101-0022 (JP)**
- **YANADA Tetsuo**
  **Tokyo 101-0022 (JP)**
- **YAMASAKI Masaru**
  **Tokyo 100-8280 (JP)**
- **TOBARI Kazuaki**
  **Tokyo 100-8280 (JP)**

(74) Representative: **MERH-IP Matias Erny Reichl Hoffmann**
**Patentanwälte PartG mbB**
**Paul-Heyse-Strasse 29**
**80336 München (DE)**

(56) References cited:
**WO-A1-2018/173654    JP-A- 2018 156 557**
**JP-A- 2019 082 791    US-A- 5 970 033**

- **Kichul Hong ET AL: "A load torque compensation scheme under the speed measurement delay", IEEE Transactions on Industrial Electronics, 1 January 1998 (1998-01-01), pages 283-290, XP055238839, DOI: 10.1109/41.681227 Retrieved from the Internet: URL:http://ieeexplore.ieee.org/ielx4/41/14 965/00681227.pdf?tp=&arnumber=681227&isnu m ber=14965 [retrieved on 2022-05-13]**
- **WATANABE, KEIJI et al.: "Disturbance Rejection of Smith Predictor Control System", Transactions of the Society of Instrument and Control Engineers, pages 187-192, XP055614371, ISSN: 0453-4654, DOI: 10.9746/sicetr1965.19.187**
- **FUKUNAGA, YOSUKE et al.: "Development of a Highly-Responsive Acceleration Control for the Nissan LEAF", Nissan Technical Review, pages 16-20, ISSN: 0385-9266**

**Description**

TECHNICAL FIELD

The present invention relates to a feedback control method and a feedback control device.

BACKGROUND ART

In recent years, in the FA field, more and more high-speed and high-accuracy control of motors is required to improve productivity.

When performing feedback control of a motor, the control gain may be increased in order to suppress disturbance and make the amount of control follow the target value at high speed and with high accuracy. However, it is generally known that, if there is a delay element (for example, calculation delay of a low-pass filter or a digital control device) in the feedback loop, the upper limit in the setting of the control gain of the feedback control system is restricted due to this, which interferes with high-speed and high-accuracy target value followability.

Non-Patent Document 1 has been proposed as a design method of a delay compensator that can compensate for the delay element existing in the closed loop of the feedback control system and suppress the step disturbance applied to the input end of the control target without steady-state deviation even when the control target has a pole at the origin.

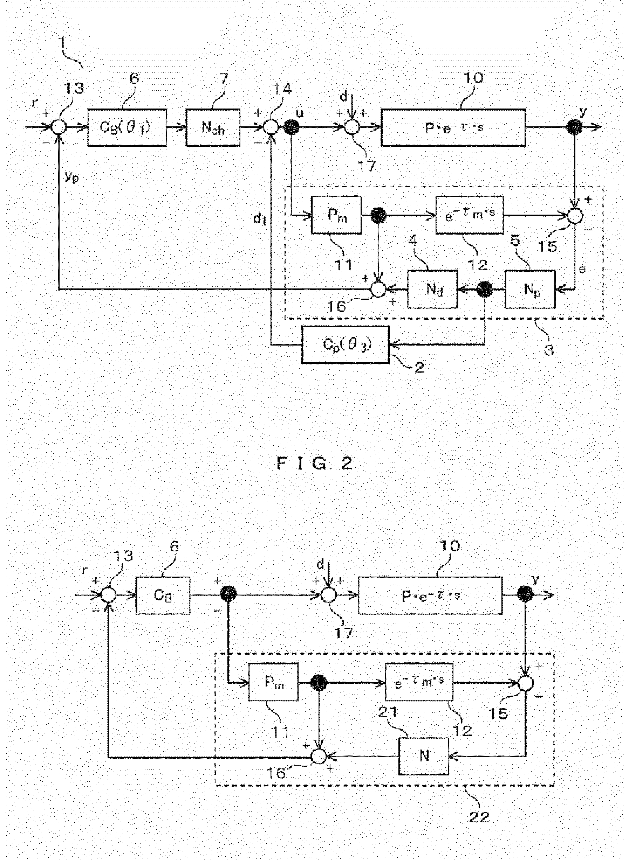

Non-Patent Document 1 has proposed a delay compensator obtained by applying a filter N 21 to the conventional Smith method, and describes a design method of the filter N 21 to solve a problem that the influence of disturbance remains for a long time when the control target has a pole close to the origin or a problem that a steady-state deviation remains in suppressing the step disturbance applied to the input end of the control target when the control target has a pole at the origin, which is a problem of the Smith method (configuration in the case of filter N 21 = 1 in Fig. 2).

In addition, when the control target has a resonance characteristic, if an attempt to increase the control gain is made in order to suppress disturbance and make the amount of control follow the target value at high speed and with high accuracy, there is a case where resonance is excited and stable control cannot be performed, and accordingly, the control gain is not increased.

As a means for preventing this, a method of providing a band stop filter (or a notch filter) having a resonance frequency as a center frequency after a controller is known, see for example US5970033 A.

By providing the band stop filter (or the notch filter), the ability of the band stop filter (or the notch filter) to suppress the disturbance of the controller at the band stop frequency is lowered to cause a situation in which the disturbance is likely to excite the resonance.

Non-Patent Document 2 has been proposed as a control method for preventing the excitation of resonance due to disturbance.

Non-Patent Document 2 describes a method in which a band stop filter having a resonance frequency as a center frequency is provided after a controller so that the controller does not excite the torsional resonance of a driving force transmission system of a vehicle and, in order to compensate for a situation in which the controller cannot sufficiently suppress the disturbance around the resonance frequency by the band stop filter and accordingly the resonance is easily excited due to the disturbance, a disturbance observer and a bandpass filter having a resonance frequency as a center frequency are separately provided.

CITATION LIST

NON-PATENT DOCUMENT

Non-Patent Document 1: WATANABE et al., Disturbance Rejection of Smith Predictor Control System, Transactions of the Society of Instrument and Control Engineers, Vol. 19, Issue 3, pp. 187-192, 1983

Non-Patent Document 2: Development of a Highly-Responsive Acceleration Control for the Nissan LEAF, Nissan technique Nos. 69 and 70 (2012-1)

SUMMARY OF THE INVENTION

PROBLEMS TO BE SOLVED BY THE INVENTION

In Non-Patent Document 1, when the control target has a resonance characteristic, there is no means for preventing the excitation of resonance due to the controller or disturbance, such as providing a notch filter after the controller or providing a disturbance observer after the controller. Therefore, there has been a problem that resonance suppression is not sufficient.

In addition, in Non-Patent Document 2, the controller is configured such that the band stop filter for suppressing resonance is provided after the controller and the disturbance observer and the bandpass filter for compensating for the excitation of resonance due to disturbance are provided. However, there is no mechanism for compensating for the delay element existing in the closed loop of the feedback control system. For this reason, when compensating for the delay, a separate delay compensator needs to be added. Therefore, there has been a problem that the calculation cost increases.

It is an object of the present invention to provide a feedback control method in which a delay element existing in the closed loop of a feedback control system can be compensated for even when a control target has a pole at the origin, in which a controller does not excite resonance and the excitation of resonance due to disturbance can be prevented even if the control target has a resonance characteristic, and which can be realized at low calculation cost.

SOLUTIONS TO PROBLEMS

A preferred example of the present invention is a feedback control method of a control device including a delay compensator including a filter and a model of a control target having a nominal plant model and a nominal model of a delay element, a first feedback controller, a notch filter, and a disturbance compensator. The delay compensator receives an operation amount for the control target as an input, causes the filter to operate on an error calculated from an output of the control target with respect to the operation amount and an output of the model of the control target with respect to the operation amount, and calculates an output of the delay compensator based on an operation result of the filter and an output of the nominal plant model with respect to the operation amount. The notch filter is provided after the first feedback controller so as to process an output of the first feedback controller. The filter is configured as a function of a second feedback controller corresponding to the nominal plant model and the model of the control target so that delay compensation can be stably performed even when the control target has a pole at an origin. The filter is decomposed into a first filter and a second filter. In the first filter, a round-trip transmission characteristic is given by a product of the model of the control target and the second feedback controller, and an open-loop characteristic is given by a closed-loop system transmission characteristic configured such that an output is equivalent to an input. In the disturbance compensator, an output of the first filter is processed by a third feedback controller, and an output of the third feedback controller is an output of the disturbance compensator. The first feedback controller performs feedback compensation on the control target based on a deviation between the output of the delay compensator and a target value, and calculates the operation amount for the control target based on an output of the notch filter and the output of the disturbance compensator.

EFFECTS OF THE INVENTION

According to the present invention, even when the control target has a pole at the origin, the delay element existing in the closed loop of the feedback control system can be compensated for. Even if the control target has a resonance characteristic, the controller does not excite resonance and the excitation of resonance due to disturbance can be prevented. In addition, low calculation cost can be realized.

BRIEF DESCRIPTION OF THE DRAWINGS

Fig. 1 is a diagram illustrating the configuration of a feedback control system according to a first embodiment.
Fig. 2 is a diagram describing a comparative example.
Fig. 3 is a diagram illustrating the configuration of a disturbance observer.
Fig. 4 is a diagram illustrating the configuration of a feedback control system according to a second embodiment.
Fig. 5 is a diagram illustrating the configuration of a feedback control system according to a third embodiment.
Fig. 6 is a diagram illustrating the configuration of a speed control system for an AC servomotor according to a fourth embodiment.

MODE FOR CARRYING OUT THE INVENTION

Hereinafter, embodiments of the present invention will be described with reference to the diagrams. In the embodiments, "feedback" is abbreviated as "FB". For example, "feedback controller" is abbreviated as "FB controller".

FIRST EMBODIMENT

As illustrated in Fig. 1, a feedback control device 1 according to a first embodiment includes a delay compensator 3, a notch filter 7, a disturbance compensator, and an FB controller.

A filter Np 5 as a first filter and a filter Nd 4 as a second filter in Fig. 1 match a filter N 21 (refer to Fig. 2) configured such that the multiplication Np $\times$ Nd can suppress step disturbance applied to the input end of the control target without steady-state deviation even when the control target has a pole at the origin.

That is, the filter Np 5 as the first filter and the filter Nd 4 as the second filter are obtained by decomposing the filter N 21. The design method of the filter N 21 is described in (Japanese Patent No. 2018-156557 A), Japanese Patent Application No. 2017-054595 (hereinafter, referred to as a prior application).

Here, the delay compensator 3 is configured to include a nominal plant model 11, a nominal model 12 of a delay element, an adder/subtractor 15, an adder/subtractor 16, the filter Nd 4, and the filter Np 5.

In addition, the disturbance compensator is configured to include the nominal plant model 11, the nominal model 12 of a delay element, the adder/subtractor 15, the filter Np 5, and an FB controller Cp($\theta$3) 2.

In addition, the filter N 21 is configured as a function of an FB controller Ca that is a second FB controller corresponding to a nominal plant model, a nominal plant model, and a nominal model of a delay element included in the feedback control system, so that delay compensation can be stably performed even when the control target has a pole at the origin.

In Fig. 1, a control target 10 including a delay is FB-controlled by an FB controller 6, the notch filter 7, the delay compensator 3, and the disturbance compensator.

The delay compensator 3 has a model of the control target thereinside, and the model of the control target in the present embodiment includes the nominal plant model 11 and the nominal model 12 of a delay element.

In addition, when an element that generates a delay, such as a filter or a minor loop control system, is included in the closed-loop system, the model of the control target may include nominal models of these delay elements.

An error signal e is calculated by the adder/subtractor 15 from the output signal of the control target and the output signal of the model of the control target with respect to an operation amount u. By adding a signal resulting from the operations of the filter Np 5 and the filter Nd 4 and the output signal of the nominal plant model 11 to the error signal e using the adder/subtractor 16, an output signal yp of the delay compensator 3 is calculated.

The output signal yp of the delay compensator is a predicted value signal of the output signal of the control target considering the delay element included in the control target. The deviation between the output signal yp and a target value signal r is calculated by the adder/subtractor 13, and the FB controller 6 performs compensation on the control target based on the deviation.

Assuming an ideal state with no modeling error and no disturbance, the error signal e calculated by the adder/subtractor 15 is zero, and the FB controller 6 can be regarded as performing FB control for a nominal plant model Pm that does not include a delay. As a result, it can be easily understood that the control gain of the FB controller 6 can be increased.

An output d1 of the disturbance compensator is obtained by processing the output signal of the filter Np 5 included in the delay compensator 3 using the FB controller Cp($\theta$3) 2, and it is assumed that the FB controller Cp($\theta$3) 2 has the same structure as an FB controller CB($\theta$1) 6 and respective control parameters $\theta$1 and $\theta$3 can be designed independently.

In the present embodiment, it is assumed that the control target 10 has one resonance characteristic, and the resonance frequency is described as $\omega$m1. In addition, even if the control target 10 has one or more resonance characteristics, the present embodiment can be applied when the resonance frequency at which the occurrence of resonance needs to be prevented is $\omega$m1.

When the input (operation amount u) of the control target 10 includes a resonance frequency component, resonance is excited. Therefore, it is desirable that the operation amount of the FB controller 6 does not include the resonance frequency.

As a means for realizing this, as illustrated in Fig. 1, a notch filter Nch 7 whose notch frequency matches the resonance frequency $\omega$m1 is provided after the FB controller 6. Therefore, the operation amount with the resonance frequency component removed can be input to the control target 10.

On the other hand, the FB controller 6 plays a role of suppressing disturbance d. However, due to the notch filter Nch 7 being provided, the ability to suppress the disturbance d becomes insufficient around the resonance frequency, so that the disturbance can excite the resonance.

As a means for preventing this, it is considered that the disturbance d is estimated and the disturbance d is offset by subtracting the disturbance estimation value from the output of the notch filter Nch 7 using the adder/subtractor 14 provided after the notch filter Nch 7.

For the disturbance estimation value, there is a method of adding a disturbance observer to the control system, for example, as described in Non-Patent Document 2. However, if the output of the FB controller Cp($\theta$3) 2, which is a third feedback controller in Fig. 1, has a meaning of the disturbance estimation value, it is not necessary to additionally provide the disturbance observer. In addition, the calculation of the filter N 21 of the delay compensator illustrated in Fig. 2 is shared. Therefore, by simply adding the FB controller Cp(θ3) 2 to the delay compensator 3, it is possible to prevent the occurrence of resonance due to disturbance while preventing an increase in calculation cost.

Hereinafter, in the present embodiment, Fig. 1 illustrates that the output of the FB controller Cp(θ3) 2 can have the meaning of the disturbance estimation value.

In the filter Np 5 that is a first filter, the round-trip transmission characteristic is given by the product of the model of the control target and the second FB controller. In addition, the open-loop characteristic is given by the closed-loop system transmission characteristic configured such that the output is equivalent to the input, and is expressed by Equation (1).

[Equation 1]

$$N_p = \frac{1}{1 + P_m C_a(\theta_2) e^{-\tau_m \cdot s}} \qquad (1)$$

Here, $P_m$ indicates a nominal plant model of a control target P, $C_a(\theta_2)$ indicates a second FB controller, and $e^{-\tau_m \cdot s}$ indicates a nominal model of a delay element.

Here, Ca(θ2) is a second FB controller having the same structure as the first FB controller CB(θ1) 6 and capable of arbitrarily determining a parameter θ2 independently of θ1.

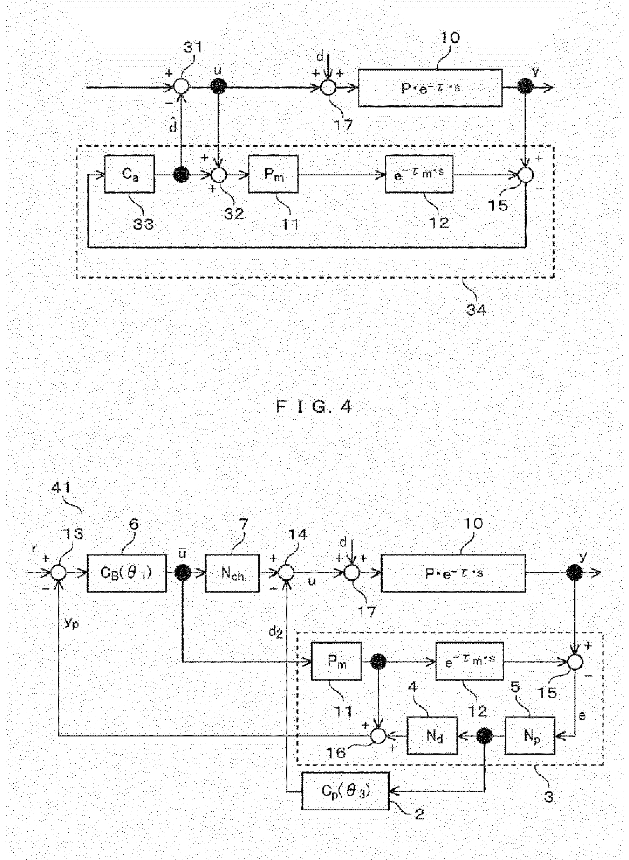

The fact that the output when the error signal e calculated by the adder/subtractor 15 is input to Np × Cp(θ3) has the meaning of the disturbance estimation value will be described with reference to Fig. 3.

Fig. 3 is an example of the configuration of a generally known disturbance observer 34, and the disturbance estimation value in Fig. 3 is given by Equation (2). However, a block 33 in Fig. 3 is assumed to be the FB controller Ca(θ2) described in Equation (1).

[Equation 2]

$$\hat{d} = \frac{C_a(\theta_2)}{1 + P_m C_a(\theta_2) e^{-\tau_m \cdot s}} \{ P e^{-\tau \cdot s} d + (P e^{-\tau \cdot s} - P_m e^{-\tau_m \cdot s}) u \} \qquad (2)$$

On the other hand, the error signal e in Fig. 1 is given by the following Equation (3).

[Equation 3]

$$e = P e^{-\tau \cdot s} d + (P e^{-\tau \cdot s} - P_m e^{-\tau_m \cdot s}) u \qquad (3)$$

According to Fig. 1, the output d1 of the disturbance compensator is given by Equation (4).

[Equation 4]

$$d_1 = C_p(\theta_3) \cdot N_p \cdot e = \frac{C_p(\theta_3)}{1 + P_m C_a(\theta_2) e^{-\tau_m \cdot s}} \{ P e^{-\tau \cdot s} d + (P e^{-\tau \cdot s} - P_m e^{-\tau_m \cdot s}) u \} \qquad (4)$$

Ca and Cp are FB controllers having the same structure. Therefore, when the control parameters are θ2 = θ3, the output d1 of the disturbance compensator in Fig. 1 matches the disturbance estimation value of the disturbance observer 34 illustrated in Fig. 3. That is, it can be said that the disturbance compensator in Fig. 1 plays the role of the disturbance observer 34.

In the prior application, for the design of the filter N 21, Equations (5) and (6) are shown.

[Equation 5]

$$N = \frac{1 + P_m C_a(\theta_2)}{1 + P_m C_a(\theta_2) e^{-\tau_m \cdot s}} \qquad (5)$$

[Equation 6]

$$N = \frac{1+P_m C_a(\theta_2)+\frac{C_a(\theta_2)}{C_B(\theta_1)}}{1+P_m C_a(\theta_2)e^{-\tau_m \cdot s}} \qquad (6)$$

Here, $\theta 2 \leq \theta 1$.

Assuming that the filter N 21 is given by Equations (5) and (6), the filter Np 5 is given as in Equation (1). Therefore, the filter Nd 4 as a second filter when the filter N 21 is given as Equations (5) and (6) is Equations (7) and (8), respectively.

[Equation 7]

$$N_d = 1 + P_m C_a(\theta_2) \qquad (7)$$

[Equation 8]

$$N_d = 1 + P_m C_a(\theta_2) + \frac{C_a(\theta_2)}{C_B(\theta_1)} \qquad (8)$$

According to the configuration of Fig. 1, the influence of the output signal of the filter N 21 for delay compensation on the delay compensation in the output (operation amount) of the FB controller CB 6 is reduced by the notch filter Nch 7 around the resonance frequency. Therefore, this can be interpreted as acting on the control target 10.

In order to make the disturbance compensator in Fig. 1 have the meaning of the disturbance observer 34 while preventing the notch filter Nch 7 from interfering with the original performance of the filter N 21, when the filter N 21 for delay compensation is selected as Equation (5), the FB controller Cp($\theta 3$) 2 and the filter Nd 4 may be defined as in Equations (9) and (10), respectively.

[Equation 9]

$$C_p(\theta_3) = C_B(\theta_1), \qquad \theta_1 = \theta_3 \qquad (9)$$

[Equation 10]

$$N_d = P_m C_a(\theta_2) \qquad (10)$$

The reason is as follows. Equation (5) can be modified as in Equation (11) using Equations (1) and (10).

[Equation 11]

$$N = \frac{1+P_m C_a(\theta_2)}{1+P_m C_a(\theta_2)e^{-\tau_m \cdot s}} = N_p + P_m C_a(\theta_2) \cdot N_p = N_p + N_d \cdot N_p \qquad (11)$$

The output of the output signal of the filter N 21 (= Np $\times$ Nd), which receives the error signal e as its input, at the FB controller CB in Fig. 1 can be written as Equation (12) using Equation (11).

[Equation 12]

$$-C_B(\theta_1) \cdot N \cdot e = -C_B(\theta_1)\big(N_p + N_d \cdot N_p\big)e = -C_B(\theta_1)N_p e - C_B(\theta_1) \cdot N_d \cdot N_p \cdot e \qquad (12)$$

It can be seen that the first term on the right side of Equation (12) is Equation (13) and has the meaning of disturbance estimation.

[Equation 13]

$$-C_B(\theta_1)N_p e = -\frac{C_B(\theta_1)}{C_a(\theta_2)} \cdot \frac{C_a(\theta_2)}{1+P_m C_a(\theta_2)e^{-\tau_m \cdot s}}\{Pe^{-\tau \cdot s}d + (Pe^{-\tau \cdot s} - P_m e^{-\tau_m \cdot s})u\}$$

$$= -\frac{C_B(\theta_1)}{C_a(\theta_2)} \cdot d \qquad\qquad (13)$$

Ca is an FB controller having the same structure as CB. Therefore, if θ1 = θ2, the first term on the right side of Equation (12) is a disturbance estimation value by the disturbance observer illustrated in Fig. 3.

In order not to suppress the effect of Equation (13) by the notch filter Nch 7, the signal described by Equation (13) may be added to a stage subsequent to the notch filter Nch 7.

The output d1 of the disturbance compensator in Fig. 1 is given by Equation (13) × (-1) by defining the FB controller Cp(θ3) as in Equation (9).

Therefore, by defining the FB controller Cp(θ3) as in Equation (9) in Fig. 1, it is possible to add Equation (13), which is a term having the meaning of disturbance estimation, to a stage subsequent to the notch filter Nch 7.

In addition, by selecting the filter Nd 4 as in Equation (10), it is possible to play the role of the second term on the right side of Equation (12) at the output of the FB controller CB.

That is, when the filter N 21 is selected as in Equation (5), a portion having the meaning of disturbance estimation in the filter N 21 of Equation (5) can be cut out after the notch filter Nch 7 by using Equations (9) and (10).

In addition, the role of disturbance suppression and delay compensation that the filter of Equation (5) originally has can be given to the control target 10 as an operation amount without being affected by the band stop of the notch filter Nch 7.

In the present embodiment, the disturbance observer can be configured by adding only the Cp shown in Equation (9) to the comparative example illustrated in Fig. 2 without separately providing the disturbance observer illustrated in Fig. 3, so that it is possible to suppress the occurrence of resonance due to disturbance.

Therefore, according to the controller configuration according to the present embodiment illustrated in Fig. 1, when the filter N 21 is set as in Equation (5), a delay element existing in the closed loop of the feedback control system can be compensated for even if the control target has a pole at the origin by the delay compensator 3.

In addition, since it is possible to configure the disturbance compensator while preventing an increase in calculation cost, the occurrence of resonance due to disturbance can be suppressed. In addition, since the notch filter is provided after the controller, the occurrence of resonance due to the controller can be suppressed.

In addition, when the filter N 21 is selected as in Equation (6), in order to make the disturbance compensator in Fig. 1 have the meaning of the disturbance observer while preventing the notch filter Nch 7 from interfering with the original performance of the filter N 21, the FB controller Cp(θ3) 2 and the filter Nd 4 may be set as in Equations (14) and (15), respectively.

[Equation 14]

$$C_p(\theta_3) = C_B(\theta_1) + C_a(\theta_2) \qquad\qquad (14)$$

[Equation 15]

$$N_d = P_m C_a(\theta_2) \qquad\qquad (15)$$

In addition, it is assumed that the linear combination of CB and Ca is an FB controller having the same structure as CB. As an example satisfying this restriction, a PID controller can be mentioned.

The reason is as follows.

Equation (6) can be modified as in Equation (16) using Equations (1) and (10) .

[Equation 16]

$$N = \frac{1+P_m C_a(\theta_2)+\frac{C_a(\theta_2)}{C_B(\theta_1)}}{1+P_m C_a(\theta_2)e^{-\tau_m \cdot s}} = \left(1 + \frac{C_a(\theta_2)}{C_B(\theta_1)}\right)N_p + N_d \cdot N_p \qquad (16)$$

The output of the output signal of the filter N 21 (= Np × Nd), which receives the error signal e as its input, at the FB controller CB in Fig. 1 can be written as Equation (17) using Equation (16) .

[Equation 17]

$$-C_B(\theta_1) \cdot N \cdot e = -\big(C_B(\theta_1) + C_a(\theta_2)\big) N_p e - C_B(\theta_1) \cdot N_d \cdot N_p \cdot e \qquad (17)$$

It can be seen that the first term on the right side of Equation (17) is a term having the meaning of disturbance estimation as shown in Equation (18).

[Equation 18]

$$-\big(C_B(\theta_1) + C_a(\theta_2)\big) N_p e = -\frac{C_B(\theta_1)}{C_a(\theta_2)} \cdot \hat{d} - \hat{d} \qquad (18)$$

In order not to suppress the effect of Equation (18) by the notch filter Nch 7, the effect of Equation (18) may be added to a stage subsequent to the notch filter Nch 7.

The output d1 of the disturbance compensator in Fig. 1 is given by Equation (18) × (-1) by selecting the FB controller Cp(θ3) as in Equation (14).

Therefore, in Fig. 1, by selecting the FB controller Cp(θ3) as in Equation (14), it is possible to add Equation (18), which is a term having the meaning of disturbance estimation, to a stage subsequent to the notch filter Nch 7.

In addition, by selecting the filter Nd 4 as in Equation (15), it is possible to play the role of the second term on the right side of Equation (17) at the output of the FB controller CB.

That is, even when the filter N 21 is selected as in Equation (6), a portion having the meaning of disturbance estimation in the filter N 21 of Equation (6) can be cut out after the notch filter Nch 7 by using Equations (14) and (15). In addition, the role of disturbance suppression and delay compensation that the filter of Equation (6) originally has can be given to the control target as an operation amount without being affected by the band stop of the notch filter Nch 7.

In the present embodiment, the disturbance observer can be configured by adding only the Cp shown in Equation (14) to the comparative example illustrated in Fig. 2 without additionally providing the disturbance observer 34 illustrated in Fig. 3, so that it is possible to suppress the occurrence of resonance due to disturbance.

Therefore, according to the controller configuration according to the present embodiment illustrated in Fig. 1, even when the filter N 21 is set as in Equation (6), a delay element existing in the closed loop of the feedback control system can be compensated for even if the control target has a pole at the origin by the delay compensator 3.

In addition, since the disturbance compensator can be configured while preventing an increase in calculation cost, the occurrence of resonance due to disturbance can be suppressed. In addition, since the notch filter is provided after the controller, the occurrence of resonance due to the controller can be suppressed.

In addition, when the filter N 21 is selected as in Equations (5) and (6), the filter Nd is selected so as to be Equation (15) in any case. However, when the filter N 21 is selected as in Equation (5), the FB controller Cp(θ3) 2 as a third feedback controller and the filter Nd 4 as a second filter can also be set as in Equations (19) and (20), respectively.

[Equation 19]

$$C_p(\theta_3) = C_B(\theta_1) \cdot (1 - \gamma), \quad \theta_1 = \theta_3 \qquad (19)$$

[Equation 20]

$$N_d = \gamma + P_m C_a(\theta_2) \qquad (20)$$

Here, $\gamma$ is a real number satisfying $0 < \gamma \le 1$.

This is a configuration in which the output d1 of the disturbance compensator is weakened by $(1 - \gamma)$ times and the weakened portion is compensated for at the output of the filter N 21. That is, the output of the third feedback controller and the output of the second filter are adjusted to each other. As a result, the degree of compensation around the notch frequency of the disturbance compensator can be adjusted by $\gamma$ that is an adjustment parameter.

In addition, when the filter N 21 is selected as in Equation (6), the FB controller Cp(θ3) 2 and the filter Nd 4 can also be set as in Equations (21) and (22), respectively.

[Equation 21]

$$C_p(\theta_3) = (C_B(\theta_1) + C_a(\theta_2)) \cdot (1 - \gamma) \qquad (2\ 1)$$

[Equation 22]

$$N_d = \gamma + P_m C_a(\theta_2) + \gamma \frac{C_a(\theta_2)}{C_B(\theta_1)} \qquad (2\ 2)$$

This is a configuration in which the output d1 of the disturbance compensator is weakened by (1 - $\gamma$) times and the weakened portion is compensated for at the output of the filter N 21. As a result, the degree of compensation around the notch frequency of the disturbance compensator can be adjusted by $\gamma$.

SECOND EMBODIMENT

Fig. 4 is a diagram illustrating the configuration of a feedback control system 41 according to a second embodiment. The description of functions common to those in the first embodiment will be omitted.

As illustrated in Fig. 4, a feedback control device according to the second embodiment includes a delay compensator 3, a notch filter 7, a disturbance compensator, and an FB controller 6.

The filter Nd 4 and the filter Np 5 in Fig. 4 are obtained by decomposing the filter N 21 such that Np $\times$ Nd, which is a multiplication thereof, matches the filter N 21 capable of suppressing step disturbance applied to the input end of the control target without steady-state deviation even when the control target has a pole at the origin as illustrated in Fig. 2.

In Fig. 4, a control target 10 including a delay is FB-controlled by the FB controller 6, the notch filter 7, the delay compensator 3, and the disturbance compensator.

The FB controller 6, the notch filter 7, the delay compensator 3, and the disturbance compensator are the same as those shown in the first embodiment, but the difference is that the input of the delay compensator 3 is the operation amount u for the control target 10 in the first embodiment, whereas the input of the delay compensator 3 is the output signal of the FB controller 6 in the second embodiment.

In the first embodiment, the effect of the band stop of the output of the FB controller 6 by the notch filter Nch 7 is reflected in the control target 10 and the nominal plant model 11 in a balanced manner.

On the other hand, in the second embodiment, the effect of the band stop of the output of the FB controller 6 by the notch filter Nch 7 is reflected only in the control target 10.

In addition, in the first embodiment, the position where the output d1 of the disturbance compensator is FB is before the input u of the delay compensator. However, in the present embodiment, the position where an output d2 of the disturbance compensator is FB is after the input of the delay compensator.

Compared with the first embodiment, in the controller configuration of the second embodiment, the input signal of the delay compensator 3 is changed and the position where the disturbance estimation value is FB is changed. Therefore, the output (disturbance estimation value) d2 of the disturbance compensator in the configuration of Fig. 4 has a different estimation accuracy from d1.

For example, which of the first embodiment and the second embodiment can expect the estimation accuracy of the disturbance d is different between a case where both the plant model P and the nominal plant model Pm have a resonance characteristic in which the resonance frequency is $\omega$m1 and a case where only the plant model P has a resonance characteristic in which the resonance frequency is $\omega$m1. Therefore, the configuration of the first embodiment or the configuration of the second embodiment is selected according to the application and purpose.

Also in the second embodiment, by defining the filter Nd 4, the filter Np 5, and the FB controller Cp as in the first embodiment, the output d2 of the disturbance compensator can have the meaning of disturbance estimation.

Therefore, according to the configuration of the controller according to the present embodiment illustrated in Fig. 4, a delay element existing in the closed loop of the feedback control system can be compensated for even if the control target has a pole at the origin by the delay compensator 3.

In addition, since it is possible to configure the disturbance compensator while preventing an increase in calculation cost, the occurrence of resonance due to disturbance can be suppressed. In addition, since the notch filter is provided after the controller, the occurrence of resonance due to the controller can be suppressed.

THIRD EMBODIMENT

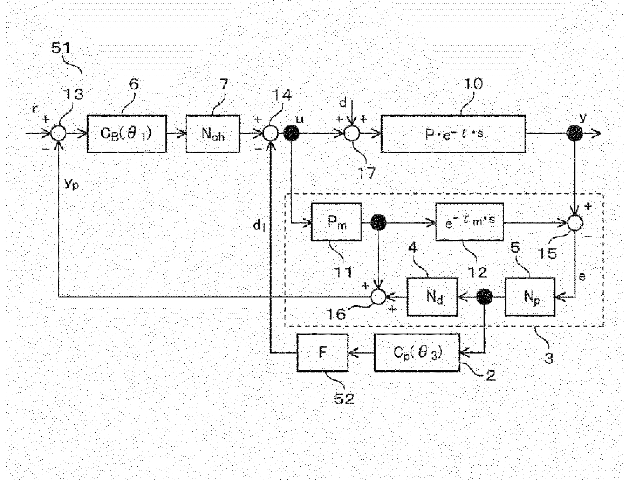

Fig. 5 is a diagram illustrating the configuration of a feedback control system 51 according to the third embodiment. The description of functions common to those in the first embodiment will be omitted.

The present embodiment is different from the first embodiment in that the output signal of the disturbance compensator is processed by a bandpass filter 52 in the controller configuration of the first embodiment.

The center frequency of the bandpass filter 52 is selected so as to match the resonance frequency ωm1 of the control target 10. As a result, the disturbance compensator can compensate only for the effect of the output signal of the filter N 21 on the control target lost around the notch frequency of the notch filter Nch 7.

Therefore, according to the configuration of the controller according to the present embodiment illustrated in Fig. 5, even if the control target has a pole at the origin, a delay element existing in the closed loop of the feedback control system can be compensated for by the delay compensator 3.

In addition, compared with a case where the disturbance observer is additionally provided, it is possible to configure the disturbance compensator while preventing an increase in calculation cost. As a result, the occurrence of resonance due to disturbance can be suppressed. In addition, since the notch filter is provided after the controller, it is possible to suppress the occurrence of resonance due to the controller.

FOURTH EMBODIMENT

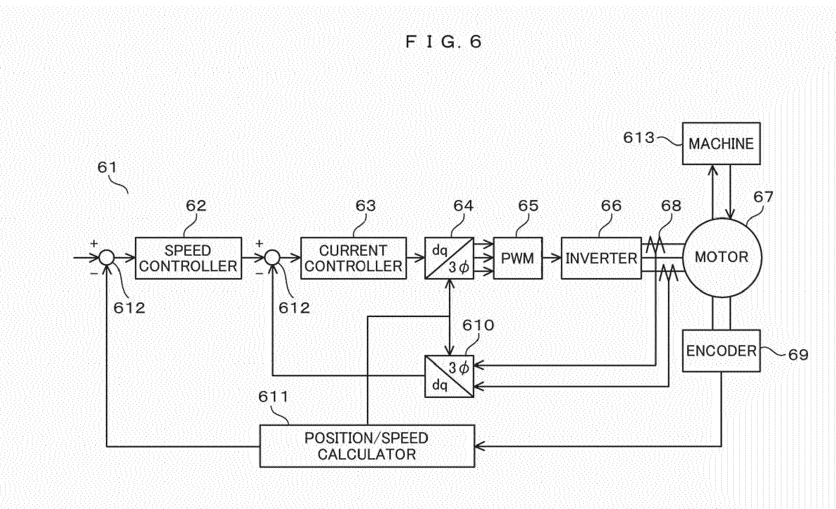

Fig. 6 is a diagram illustrating the configuration of a speed control system 61 of an AC servomotor according to a fourth embodiment. A motor control device according to the fourth embodiment assumes the application of an AC servomotor to a speed control system in a cascade FB control system.

Assuming that the electric circuit portion of the motor is controlled by a current controller 63 and this control cycle is sufficiently faster than a speed controller 62, the current control system is regarded as approximately 1 in the speed control system (the operation amount of the speed controller is directly transmitted to the mechanical portion (rotor) of the motor).

Therefore, the control target of the speed controller 62 is the mechanical portion (rotor) of the motor and a machine 613 combined with the rotor of the motor. In the fourth embodiment, the machine 613 is regarded as the control target 10 in the first embodiment.

In addition, the speed controller 62 is an FB controller including the delay compensator 3, the notch filter Nch 7, the FB controller 6, and the disturbance compensator shown in the first embodiment, and the target value signal r in Fig. 1 is regarded as a motor rotation speed command and the output signal yp of the delay compensator in Fig. 1 is regarded as a motor rotation speed detected from a position/speed calculator 611 in Fig. 6.

Therefore, the mechanical portion (rotor) of the motor and the machine 613 combined with the rotor of the motor are controlled and operated by the FB controller shown in the first embodiment including the delay compensator 3, the notch filter Nch 7, the FB controller 6, and the disturbance compensator.

In the present embodiment, it is assumed that the machine 613 has a resonance characteristic at the resonance frequency ωm1 and the notch frequency of the notch filter Nch 7 is set to match the resonance frequency ωm1 of the machine 613.

The FB controller 6 that is a first FB controller of the speed control system is a PI controller, and is calculated by Equations (23) to (25) corresponding to the nominal plant model Pm.

[Equation 23]

$$C_B(\omega_s) = K_{sp} + \frac{K_{si}}{s} \qquad (23)$$

Here, Ksp indicates a speed proportional gain when the speed response frequency is ωs, Ksi is a speed integral gain when the speed response frequency is ωs, and s is a Laplace operator.

[Equation 24]

$$K_{sp} = \frac{J\omega_s}{K_a P_p} \qquad (24)$$

Here, J indicates the inertia, $K_a$ indicates a motor constant, $\omega_s$ indicates the response frequency of the speed control system, and $P_p$ is the number of pole pairs.

[Equation 25]

$$K_{si} = K_{sp}\frac{\omega_s}{L} \qquad (25)$$

Here, L is a break point ratio, and $\omega_s$ is the response frequency of the speed control system.

The filter Np 5 is given by Equation (26).

[Equation 26]

$$N_p = \frac{1}{1+P_m C_a(\omega_n)e^{-\tau_m \cdot s}} \qquad (26)$$

Then, the second FB controller when the speed response frequency is ωn is calculated from the following Equations (27) to (29).

[Equation 27]

$$C_a(\omega_n) = K_{np} + \frac{K_{ni}}{s} \qquad (27)$$

[Equation 28]

$$K_{np} = \frac{J\omega_n}{K_a P_p} \qquad (28)$$

Here, Knp is a speed proportional gain when the response frequency of the speed control system is ωn.

[Equation 29]

$$K_{ni} = K_{sp}\frac{\omega_n}{L} \qquad (29)$$

Here, Kni is a speed integral gain when the response frequency of the speed control system is ωn.

However, ωn ≤ ωs is assumed corresponding to θ2 ≤ θ1 in the first embodiment.

The filter Nd 4 and the FB controller Cp 2 are defined as in Equations (30) and (31) similar to Equations (14) and (15).

[Equation 30]

$$C_p(\theta_3) = C_B(\omega_s) + C_a(\omega_n) \qquad (30)$$

[Equation 31]

$$N_d = P_m C_a(\omega_n) \qquad (31)$$

In addition, since the FB controllers CB and Ca are PI controllers, the FB controller Cp of Equation (30) is also a PI controller having the same structure as the FB controller CB.

The above-described nominal plant model Pm can be specified by Equation (32).

[Equation 32]

$$P_m \equiv \frac{K_a P_p}{Js} \qquad (32)$$

Here, s is a Laplace operator, $K_a$ is motor constant, and $P_p$ is the number of pole pairs.

When the speed control is set as PI control, Pm is specified by the above Equation (32), and the FB controller CB 6 is appropriately and uniquely determined from Equations (23), (24), and (25) corresponding to the Pm.

Due to the settings of Equations (23) to (31) shown above, also for the speed control system in the cascade FB control system of the AC servomotor illustrated in Fig. 6 of the present embodiment, as in the first embodiment, a delay element existing in the closed loop of the feedback control system can be compensated for even if the control target has a pole at the origin by the delay compensator 3.

In addition, compared with a case where the disturbance observer is added, it is possible to configure the disturbance compensator while preventing an increase in calculation cost. Due to the configuration, it is possible to suppress the occurrence of resonance due to disturbance. In addition, since the notch filter is provided after the controller, the occurrence of resonance due to the controller can be suppressed.

Since the comparative example illustrated in Fig. 2 includes the premise of the present embodiment, the parts relevant to the embodiment will be described below.

The filter N 21 in Fig. 2 is a function configured in the form of sum, difference, product, and quotient by arbitrarily using an arbitrary FB controller for the control target, a model of the control target, a transfer function of a closed-loop system configured to include the arbitrary FB controller for the control target and the model of the control target, and a round-trip transfer function of the closed-loop system. In addition, the filter N 21 belongs to a set of filters capable of making the steady-state deviation zero even when the control target has a pole at the origin and steady-state deviation for the step disturbance applied to the input end of the control target remains in the Smith method.

A design example of the filter N 21 in Fig. 2 will be described.

It is assumed that the "model of the control target" in the design method of the filter N 21 is expressed by the following Equations (33) to (35) according to Fig. 2. Here, Equation (33) indicates a nominal plant model of the control target P in Fig. 2, Equation (34) indicates a nominal delay model of the delay element includes in the entire control target, and Equation (35) indicates a nominal model of the entire control target including the delay.

[Equation 33]

$$P_m \qquad (33)$$

[Equation 34]

$$e^{-\tau_m \cdot s} \qquad (34)$$

[Equation 35]

$$P_m \cdot e^{-\tau_m \cdot s} \qquad (35)$$

In addition, for the "transfer function of the closed-loop system configured to include the FB controller corresponding to the control target and the model of the control target" in the comparative example, for example, the following Equations (36) and (37) are assumed.

[Equation 36]

$$\frac{P_m C_a e^{-\tau_m \cdot s}}{1 + P_m C_a e^{-\tau_m \cdot s}} \qquad (36)$$

[Equation 37]

$$\frac{P_m C_a}{1 + P_m C_a} \qquad (37)$$

In addition, for the "round-trip transfer function of the closed-loop system" in the comparative example, for example, the following Equations (38) and (39) are assumed.
[Equation 38]

$$P_m C_a e^{-\tau_m \cdot s} \qquad (38)$$

[Equation 39]

$$P_m C_a \qquad (39)$$

Therefore, according to the above-described design method of the filter N 21, for example, a function F shown in the following Equation (40) configures a subset of the set of filters N 21 from Equations (33) to (39).
[Equation 40]

$$F\left(C_a, P_m, P_m e^{-\tau_m \cdot s}, \frac{P_m C_a}{1 + P_m C_a}, \frac{P_m C_a e^{-\tau_m \cdot s}}{1 + P_m C_a e^{-\tau_m \cdot s}}\right) \qquad (40)$$

As described above, Np and Nd in the above embodiment are calculated so that the designed filter N 21 matches Np $\times$ Nd.

REFERENCE SIGNS LIST

3    Delay compensator
4    Filter Nd

5    Filter Np
6    FB controller CB
7    Notch filter

**Claims**

1.  A feedback control method of a control device including a delay compensator (3) including a filter (4, 5) and a model of a control target (10) having a nominal plant model (11) and a nominal model (12) of a delay element, a first feedback controller, a notch filter (7), and a disturbance compensator,

    wherein the delay compensator (3) receives an operation amount for the control target (10) as an input, causes the filter (4, 5) to operate on an error calculated from an output of the control target (10) with respect to the operation amount and an output of the model of the control target (10) with respect to the operation amount, and calculates an output of the delay compensator (3) based on an operation result of the filter (4, 5) and an output of the nominal plant model (11) with respect to the operation amount,
    the notch filter (7) is provided after the first feedback controller so as to process an output of the first feedback controller,
    the filter (4, 5) is configured as a function of a second feedback controller corresponding to the nominal plant model (11) and the model of the control target (10) so that delay compensation can be stably performed even when the control target (10) has a pole at an origin,
    the filter (4, 5) is decomposed into a first filter (Np, 5) and a second filter (Nd, 4),
    in the first filter (Np, 5), a round-trip transmission characteristic is given by a product of the model of the control target (10) and the second feedback controller, and an open-loop characteristic is given by a closed-loop system transmission characteristic configured such that an output is equivalent to an input,
    in the disturbance compensator, an output of the first filter (Np, 5) is processed by a third feedback controller, and an output of the third feedback controller is an output of the disturbance compensator, and
    the first feedback controller performs feedback compensation on the control target (10) based on a deviation between the output of the delay compensator (3) and a target value, and calculates the operation amount for the control target (10) based on an output of the notch filter (7) and the output of the disturbance compensator.

2.  The feedback control method according to claim 1,
    wherein the operation amount for the control target (10) is calculated by subtracting the output of the disturbance compensator from the output of the notch filter (7) using an adder/subtractor (13, 14, 15, 16).

3.  The feedback control method according to claim 1,

    wherein the output of the delay compensator (3) is calculated based on an output of the second filter (Nd, 4) and an output of the nominal plant model (11) with respect to the operation amount, and
    the output of the third feedback controller and the output of the second filter (Nd, 4) are adjusted to each other.

4.  A feedback control device (1), comprising:

    a delay compensator (3) including a filter (4, 5) and a model of a control target (10) having a nominal plant model (11) and a nominal model (12) of a delay element;
    a first feedback controller;
    a notch filter (7); and
    a disturbance compensator,
    wherein the delay compensator (3) receives an operation amount for the control target (10) as an input, has the filter (4, 5) to which an error calculated from an output of the control target (10) with respect to the operation amount and an output of the model of the control target (10) with respect to the operation amount is input, and calculates an output of the delay compensator (3) based on an output of the filter (4, 5) and an output of the nominal plant model (11) with respect to the operation amount,
    the notch filter (7) is provided after the first feedback controller so as to process an output of the first feedback controller,
    the filter (4, 5) is configured as a function of a second feedback controller corresponding to the nominal plant model (11) and the model of the control target (10) so that delay compensation can be stably performed even when the control target (10) has a pole at an origin,

**characterised in that** the

filter (4, 5) is decomposed into a first filter (Np, 5) and a second filter (Nd, 4),

in the first filter (Np, 5), a round-trip transmission characteristic is given by a product of the model of the control target (10) and the second feedback controller, and an open-loop characteristic is given by a closed-loop system transmission characteristic configured such that an output is equivalent to an input,

the disturbance compensator has a third feedback controller that processes an output of the first filter (Np, 5), and an output of the third feedback controller is an output of the disturbance compensator, and

the first feedback controller performs feedback compensation on the control target (10) based on a deviation between the output of the delay compensator (3) and a target value, and calculates the operation amount for the control target (10) based on an output of the notch filter (7) and the output of the disturbance compensator.

5. The feedback control device (1) according to claim 4,
wherein an adder/subtractor (13, 14, 15, 16) subtracts the output of the disturbance compensator from the output of the notch filter (7) to calculate the operation amount for the control target (10).

6. The feedback control device (1) according to claim 4,

wherein the output of the delay compensator (3) is calculated based on an output of the second filter (Nd, 4) and an output of the nominal plant model (11) with respect to the operation amount, and

the output of the third feedback controller and the output of the second filter (Nd, 4) are adjusted to each other.

7. The feedback control device (1) according to claim 4,
wherein the delay compensator (3) receives the output of the first feedback controller as an input, calculates the error based on the output of the control target (10), which is a response to the operation amount given to the control target (10), and the output of the model of the control target (10) with respect to the output of the first feedback controller, and calculates the output of the delay compensator (3) based on an operation result of the filter (4, 5) on the calculated error and the output of the nominal plant model (11) with respect to the output of the first feedback controller.

8. The feedback control device (1) according to claim 4,

wherein a bandpass filter (52) whose center frequency matches a notch frequency of the notch filter (7) is provided after the third feedback controller, and

an output obtained by processing the output of the third feedback controller using the bandpass filter (52) is the output of the disturbance compensator.

9. The feedback control device (1) according to claim 4,

wherein the feedback control device (1) is a speed controller (62), the target value is a motor rotation speed command, and

the output of the delay compensator (3) is a detected motor rotation speed.

10. The feedback control device (1) according to claim 4,

wherein the first filter (5) Np is given by following Equation:

$$N_p = \frac{1}{1 + P_m C_a(\theta_2) e^{-\tau_m \cdot s}}$$

wherein, $P_m$ indicates a nominal plant model (11), $C_a(\theta_2)$ indicates a second feedback controller, and $e^{-\tau_m \cdot s}$ indicates a nominal model (12) of a delay element.

**Patentansprüche**

1. Regelverfahren einer Steuervorrichtung, die einen Verzögerungskompensator (3), der ein Filter (4, 5) und ein Modell eines Steuerziels (10) mit einem Nennanlagenmodell (11) und einem Nennmodell (12) eines Verzögerungselements enthält, einen ersten Rückkopplungs-Controller, ein Kerbfilter (7) und einen Störungskompensator enthält,

wobei der Verzögerungskompensator (3) einen Operationsbetrag für das Steuerziel (10) als eine Eingabe empfängt, das Filter (4, 5) veranlasst, auf einen aus einer Ausgabe des Steuerziels (10) bezüglich des Operationsbetrags und einer Ausgabe des Modells des Steuerziels (10) bezüglich des Operationsbetrags berechneten Fehler zu wirken, und eine Ausgabe des Verzögerungskompensators (3) basierend auf einem Operationsergebnis des Filters (4, 5) und einer Ausgabe des Nennanlagenmodells (11) bezüglich des Operationsbetrags berechnet,

das Kerbfilter (7) nach dem ersten Rückkopplungs-Controller vorgesehen ist, um eine Ausgabe des ersten Rückkopplungs-Controllers zu verarbeiten,

das Filter (4, 5) als eine Funktion eines zweiten Rückkopplungs-Controllers, der dem Nennanlagenmodell (11) und dem Modell des Steuerziels (10) entspricht, konfiguriert ist, so dass die Verzögerungskompensation stabil ausgeführt werden kann, selbst wenn das Steuerziel (10) am Ursprung einen Pol aufweist,

das Filter (4, 5) in ein erstes Filter (Np, 5) und ein zweites Filter (Nd, 4) zerlegt ist,

in dem ersten Filter (Np, 5) eine Umlauf-Übertragungskennlinie durch ein Produkt aus dem Modell des Steuerziels (10) und dem zweiten Rückkopplungs-Controller gegeben ist und eine Steuerketten-Kennlinie durch eine Regelkreissystem-Übertragungskennlinie gegeben ist, die so konfiguriert ist, dass eine Ausgabe zu einer Eingabe äquivalent ist,

in dem Störungskompensator eine Ausgabe des ersten Filters (Np, 5) durch einen dritten Rückkopplungs-Controller verarbeitet wird und eine Ausgabe des dritten Rückkopplungs-Controllers eine Ausgabe des Störungskompensators ist und

der erste Rückkopplungs-Controller eine Rückkopplungskompensation an dem Steuerziel (10) basierend auf einer Abweichung zwischen der Ausgabe des Verzögerungskompensators (3) und einem Zielwert ausführt und den Operationsbetrag für das Steuerziel (10) basierend auf einer Ausgabe des Kerbfilters (7) und der Ausgabe des Störungskompensators berechnet.

2. Regelverfahren nach Anspruch 1,
wobei der Operationsbetrag für das Steuerziel (10) durch Subtrahieren der Ausgabe des Störungskompensators von der Ausgabe des Kerbfilters unter Verwendung eines Addierers/Subtrahierers (13, 14, 15, 16) berechnet wird.

3. Regelverfahren nach Anspruch 1,

wobei die Ausgabe des Verzögerungskompensators (3) basierend auf einer Ausgabe des zweiten Filters (Nd, 4) und einer Ausgabe des Nennanlagenmodells (11) bezüglich des Operationsbetrags berechnet wird, und die Ausgabe des dritten Rückkopplungs-Controllers und die Ausgabe des zweiten Filters (Nd, 4) aufeinander eingestellt werden.

4. Regelvorrichtung (1), die umfasst:

einen Verzögerungskompensator (3), der ein Filter (4, 5) und ein Modell eines Steuerziels (10) mit einem Nennanlagenmodell (11) und einem Nennmodell (12) eines Verzögerungselements enthält;
einen ersten Rückkopplungs-Controller;
ein Kerbfilter (7); und
einen Störungskompensator,
wobei der Verzögerungskompensator (3) einen Operationsbetrag für das Steuerziel (10) als eine Eingabe empfängt, das Filter (4, 5) aufweist, in das ein aus einer Ausgabe des Steuerziels (10) bezüglich des Operationsbetrags und einer Ausgabe des Modells des Steuerziels (10) bezüglich des Operationsbetrags berechneter Fehler eingegeben wird, und eine Ausgabe des Verzögerungskompensators (3) basierend einer Ausgabe des Filters (4, 5) und einer Ausgabe des Nennanlagenmodells (11) bezüglich des Operationsbetrags berechnet,
das Kerbfilter (7) nach dem ersten Rückkopplungs-Controller vorgesehen ist, um eine Ausgabe des ersten Rückkopplungs-Controllers zu verarbeiten,
das Filter (4, 5) als eine Funktion eines zweiten Rückkopplungs-Controllers, der dem Nennanlagenmodell (11) und dem Modell des Steuerziels (10) entspricht, konfiguriert ist, so dass die Verzögerungskompensation stabil ausgeführt werden kann, selbst wenn das Steuerziel (10) einen Pol am Ursprung aufweist,
**dadurch gekennzeichnet, dass** das Filter (4, 5) in ein erstes Filter (Np, 5) und ein zweites Filter (Nd, 4) zerlegt ist,
in dem ersten Filter (Np, 5) eine Umlauf-Übertragungskennlinie durch ein Produkt aus dem Modell des Steuerziels (10) und dem zweiten Rückkopplungs-Controller gegeben ist und eine Steuerketten-Kennlinie durch eine Regelkreissystem-Übertragungskennlinie gegeben ist, die so konfiguriert ist, dass eine Ausgabe zu einer Eingabe äquivalent ist,

der Störungskompensator einen dritten Rückkopplungs-Controller aufweist, der eine Ausgabe des ersten Filters (Np, 5) verarbeitet, und eine Ausgabe des dritten Rückkopplungs-Controllers eine Ausgabe der Störungskompensators ist und

der erste Rückkopplungs-Controller eine Rückkopplungskompensation an dem Steuerziel (10) basierend auf einer Abweichung zwischen der Ausgabe des Verzögerungskompensators (3) und einem Zielwert ausführt und den Operationsbetrag für das Steuerziel (10) basierend auf der Ausgabe des Kerbfilters (7) und der Ausgabe des Störungskompensators berechnet.

5. Regelvorrichtung (1) nach Anspruch 4,
wobei ein Addierer/Subtrahierer (13, 14, 15, 16) die Ausgabe des Störungskompensators von der Ausgabe des Kerbfilters (7) subtrahiert, um den Operationsbetrag für das Steuerziel (10) zu berechnen.

6. Regelvorrichtung (1) nach Anspruch 4,

wobei die Ausgabe des Verzögerungskompensators (3) basierend auf einer Ausgabe des zweiten Filters (Nd, 4) und einer Ausgabe des Nennanlagenmodells (11) bezüglich des Operationsbetrags berechnet wird, und die Ausgabe des dritten Rückkopplungs-Controllers und die Ausgabe des zweiten Filters (Nd, 4) aufeinander eingestellt werden.

7. Regelvorrichtung (1) nach Anspruch 4,
wobei der Verzögerungskompensator (3) die Ausgabe des ersten Rückkopplungs-Controllers als eine Eingabe empfängt, den Fehler basierend auf der Ausgabe des Steuerziels (10), die eine Antwort auf den durch das Steuerziel (10) gegebenen Operationsbetrag ist, und der Ausgabe des Modells des Steuerziels (10) bezüglich der Ausgabe des ersten Rückkopplungs-Controllers berechnet und die Ausgabe des Verzögerungskompensators (3) basierend auf einem Operationsergebnis des Filters (4, 5) an dem berechneten Fehler und der Ausgabe des Nennanlagenmodells (11) bezüglich der Ausgabe des ersten Rückkopplungs-Controllers berechnet.

8. Regelvorrichtung (1) nach Anspruch 4,

wobei ein Bandpassfilter (52), dessen Mittenfrequenz einer Sperrfrequenz des Kerbfilters (7) entspricht, nach dem dritten Rückkopplungs-Controller vorgesehen ist und
eine Ausgabe, die durch Verarbeiten der Ausgabe des dritten Rückkopplungs-Controllers unter Verwendung des Bandpassfilters (52) erhalten wird, die Ausgabe des Störungskompensators ist.

9. Regelvorrichtung (1) nach Anspruch 4,

wobei die Regelvorrichtung (1) ein Drehzahl-Controller (62) ist, der Zielwert ein Motordrehzahlbefehl ist und die Ausgabe des Verzögerungskompensators (3) eine detektierte Motordrehzahl ist.

10. Regelvorrichtung (1) nach Anspruch 4,
wobei das erste Filter (5) Np durch die folgende Gleichung gegeben ist:

$$N_p = \frac{1}{1 + P_m C_a(\theta_2) e^{-\tau_m \cdot S}}$$

wobei $P_m$ ein Nennanlagenmodell (11) angibt, $C_a(\theta_2)$ einen zweiten Rückkopplungs-Controller angibt und $e^{-\tau_m \cdot S}$ ein Nennmodell (12) eines Verzögerungselements angibt.

**Revendications**

1. Procédé de commande à rétroaction d'un dispositif de commande incluant un compensateur de retard (3) incluant un filtre (4, 5) et un modèle d'une cible de commande (10) ayant un modèle d'installation nominal (11) et un modèle nominal (12) d'un élément retardateur, un premier contrôleur à rétroaction, un filtre coupe-bande (7) et un compensateur de perturbation, dans lequel le compensateur de retard (3) reçoit une quantité de fonctionnement pour la cible de commande (10) à titre d'entrée, amène le filtre (4, 5) à fonctionner sur une erreur calculée à partir d'une entrée de la cible de commande (10) et d'une sortie du modèle de la cible de commande (10) par rapport à la quantité de fonctionnement, et calcule une sortie du compensateur de retard (3) sur la base d'un résultat de fonctionnement du filtre (4, 5) et d'une sortie du modèle d'installation nominal (11) par rapport à la quantité de fonctionnement,

le filtre coupe-bande (7) est prévu après le premier contrôleur à rétroaction de manière à traiter une sortie du premier contrôleur à rétroaction,
le filtre (4, 5) est configuré comme une fonction d'un deuxième contrôleur à rétroaction correspondant au modèle d'installation nominal (11) et au modèle de la cible de commande (10) de telle sorte qu'une compensation de retard peut être effectuée de manière stable même quand la cible de commande (10) a un pôle à une origine,
le filtre (4, 5) est décomposé en un premier filtre (Np, 5) et un second filtre (Nd, 4),
dans le premier filtre (Np, 5), une caractéristique de transmission aller-retour est donnée par un produit du modèle de la cible de commande (10) et du deuxième contrôleur à rétroaction, et une caractéristique de boucle ouverte est donnée par une caractéristique de transmission de système en boucle ouverte configurée de telle sorte qu'une sortie est équivalente à une entrée,
dans le compensateur de perturbation, une sortie du premier filtre (Np, 5) est traitée par un troisième contrôleur à rétroaction, et une sortie du troisième contrôleur rétroaction est une sortie du compensateur de perturbation, et
le premier contrôleur à rétroaction effectue une compensation à rétroaction sur la cible de commande (10) sur la base d'une déviation entre la sortie du compensateur de retard (3) et une valeur cible, et calcule la quantité de fonctionnement pour la cible de commande (10) sur la base d'une sortie du filtre coupe-bande (7) et de la sortie du compensateur de perturbation.

2. Procédé de commande à rétroaction selon la revendication 1,
dans lequel la quantité de fonctionnement pour la cible de commande (10) est calculée en soustrayant la sortie du compensateur de perturbation de la sortie du filtre coupe-bande (7) en utilisant un moyen d'addition/de soustraction (13, 14, 15, 16).

3. Procédé de commande à rétroaction selon la revendication 1,

dans lequel la sortie du compensateur de retard (3) est calculée sur la base d'une sortie du second filtre (Nd, 4) et d'une sortie du modèle d'installation nominal (11) par rapport à la quantité de fonctionnement, et
la sortie du troisième contrôleur à rétroaction et la sortie du second filtre (Nd, 4) sont ajustées l'une à l'autre.

4. Dispositif de commande à rétroaction (1), comprenant :

un compensateur de retard (3) incluant un filtre (4, 5) et un modèle d'une cible de commande (10) ayant un modèle d'installation nominal (11) et un modèle nominal (12) d'un élément retardateur ;
un premier contrôleur à rétroaction ;
un filtre coupe-bande (7) ; et
un compensateur de perturbation,
dans lequel le compensateur de retard (3) reçoit une quantité de fonctionnement pour la cible de commande (10) à titre d'entrée, comporte le filtre (4, 5) vers lequel une erreur calculée à partir d'une entrée de la cible de commande (10) par rapport à la quantité de fonctionnement et d'une sortie du modèle de la cible de commande (10) par rapport à la quantité de fonctionnement est entrée, et calcule une sortie du compensateur de retard (3) sur la base d'une sortie du filtre (4, 5) et d'une sortie du modèle d'installation nominal (11) par rapport à la quantité de fonctionnement,
le filtre coupe-bande (7) est prévu après le premier contrôleur à rétroaction de manière à traiter une sortie du premier contrôleur à rétroaction,
le filtre (4, 5) est configuré comme une fonction d'un deuxième contrôleur à rétroaction correspondant au modèle d'installation nominal (11) et au modèle de la cible de commande (10) de telle sorte qu'une compensation de retard peut être effectuée de manière stable même quand la cible de commande (10) a un pôle à une origine, **caractérisé en ce que**
le filtre (4, 5) est décomposé en un premier filtre (Np, 5) et un second filtre (Nd, 4),
dans le premier filtre (Np, 5), une caractéristique de transmission aller-retour est donnée par un produit du modèle de la cible de commande (10) et du deuxième contrôleur à rétroaction, et une caractéristique de boucle ouverte est donnée par une caractéristique de transmission de système en boucle ouverte configurée de telle sorte qu'une sortie est équivalente à une entrée,

le compensateur de perturbation a un troisième contrôleur à rétroaction qui traite une sortie du premier filtre (Np, 5), et une sortie du troisième contrôleur rétroaction est une sortie du compensateur de perturbation, et le premier contrôleur à rétroaction effectue une compensation à rétroaction sur la cible de commande (10) sur la base d'une déviation entre la sortie du compensateur de retard (3) et une valeur cible, et calcule la quantité de fonctionnement pour la cible de commande (10) sur la base d'une sortie du filtre coupe-bande (7) et de la sortie du compensateur de perturbation.

5. Dispositif de commande à rétroaction (1) selon la revendication 4,
dans lequel moyen d'addition/de soustraction (13, 14, 15, 16) soustrait la sortie du compensateur de perturbation de la sortie du filtre coupe-bande (7) pour calculer la quantité de fonctionnement pour la cible de commande (10).

6. Dispositif de commande à rétroaction (1) selon la revendication 4,

dans lequel la sortie du compensateur de retard (3) est calculée sur la base d'une sortie du second filtre (Nd, 4) et d'une sortie du modèle d'installation nominal (11) par rapport à la quantité de fonctionnement, et
la sortie du troisième contrôleur à rétroaction et la sortie du second filtre (Nd, 4) sont ajustées l'une à l'autre.

7. Dispositif de commande à rétroaction (1) selon la revendication 4,
dans lequel le compensateur de retard (3) reçoit la sortie du premier contrôleur à rétroaction à titre d'entrée, calcule l'erreur sur la base de la sortie de la cible de commande (10), qui est une réponse à la quantité de fonctionnement donnée à la cible de commande (10), et de la sortie du modèle de la cible de commande (10) par rapport à la sortie du premier contrôleur à rétroaction, et calcule la sortie du compensateur de retard (3) sur la base d'un résultat de fonctionnement du filtre (4, 5) sur l'erreur calculée et la sortie du modèle d'installation nominal (11) par rapport à la sortie du premier contrôleur à rétroaction.

8. Dispositif de commande à rétroaction (1) selon la revendication 4,

dans lequel un filtre passe-bande (52) dont une fréquence centrale correspond à une fréquence coupe-bande du filtre coupe-bande (7) est prévu après le troisième contrôleur à rétroaction, et
une sortie obtenue en traitant la sortie du troisième contrôleur à rétroaction en utilisant le filtre à-bande (52) est la sortie du compensateur de perturbation.

9. Dispositif de commande à rétroaction (1) selon la revendication 4,

dans lequel le dispositif de commande à rétroaction (1) est un contrôleur de vitesse (62), la valeur cible étant un ordre de vitesse de rotation de moteur, et
la sortie du compensateur de retard (3) est une vitesse de rotation de moteur détectée.

10. Dispositif de commande rétroaction (1) selon la revendication 4,
dans lequel le premier filtre (5, Np) est donné par l'équation suivante :

$$N_p = \frac{1}{1 + P_m C_a(\theta_2) e^{-\tau_m \cdot s}}$$

où $P_m$ indique un modèle d'installation nominal (11), $C_a(\theta_2)$ indique un deuxième contrôleur à rétroaction, et $e^{-\tau_m \cdot s}$ indique un modèle nominal (12) d'un élément retardateur.

F I G. 2

F I G. 4

F I G . 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5970033 A
- JP 2018156557 A
- JP 2017054595 A

**Non-patent literature cited in the description**

- **WATANABE et al.** Disturbance Rejection of Smith Predictor Control System. *Transactions of the Society of Instrument and Control Engineers,* 1983, vol. 19 (3), 187-192
- Development of a Highly-Responsive Acceleration Control for the Nissan LEAF. *Nissan technique,* January 2012